(19) Europäisches Patentamt
European Patent Office
Office européen des brevets

(11) **EP 2 183 507 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(21) Anmeldenummer: **08785064.0**

(22) Anmeldetag: **25.07.2008**

(51) Int Cl.:
**F16H 61/688** (2006.01)

(86) Internationale Anmeldenummer:
**PCT/EP2008/006111**

(87) Internationale Veröffentlichungsnummer:
**WO 2009/013004 (29.01.2009 Gazette 2009/05)**

(54) **VERFAHREN ZUM STEUERN EINES HOCHSCHALTVORGANGES IN EINEM DOPPELKUPPLUNGSGETRIEBE**

METHOD FOR CONTROLLING A SHIFTING UP OPERATION IN A DOUBLE-CLUTCH TRANSMISSION

PROCÉDÉ DE COMMANDE D'UN PASSAGE DE RAPPORT MONTANT DANS UNE TRANSMISSION À DOUBLE EMBRAYAGE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.07.2007 DE 102007036545**

(43) Veröffentlichungstag der Anmeldung:
**12.05.2010 Patentblatt 2010/19**

(73) Patentinhaber: **GETRAG Getriebe- und Zahnradfabrik Hermann Hagenmeyer GmbH & Cie KG 74199 Untergruppenbach (DE)**

(72) Erfinder:
• **SCHAARSCHMIDT, Reinhard 75428 Illingen (DE)**
• **BUERKLE, Joachim 71726 Benningen (DE)**
• **HIMMELSBACH, Mathias 81547 München (DE)**
• **PFISTER, Roland 78713 Schramberg (DE)**
• **OTTINGER, Oliver 78112 St. Georgen (DE)**
• **SCHAEFER, Andreas 74232 Abstatt (DE)**
• **LEIBBRAND, Uwe 74321 Bietigheim-Bissingen (DE)**
• **AHNE, Raphael 71640 Ludwigsburg (DE)**
• **KALISCH, Tobias 78050 Villingen-Schwenningen (DE)**

(74) Vertreter: **Witte, Weller & Partner Phoenixbau Königstrasse 5 70173 Stuttgart (DE)**

(56) Entgegenhaltungen:
DE-A1- 10 133 695     DE-A1- 19 709 419
DE-A1- 19 939 334     DE-A1-102006 002 490
DE-A1-102006 010 934

## Beschreibung

Die vorliegend Erfindung betrifft ein Verfahren zum Steuern eines Hochschaltvorganges in einem Doppelkupplungsgetriebe, das eine mit einem Antriebsmotor verbundene Doppelkupplungsgetriebe-Eingangswelle, zwei Reibkupplungen und zwei Teilgetriebe aufweist, gemäß dem Oberbegriff des Anspruchs 1, wie aus der DE 101 33 695 A1 bekannt.

Derartige Doppelkupplungsgetriebe sind allgemein benannt. Gerade Gangstufen sind einem der zwei Teilgetriebe zugeordnet, ungerade Gangstufen dem anderen Tellgetriebe. Durch überschneidende Betätigung der den Teilgetrieben zugeordneten Reibkupplungen können Gangwechsel von einem auf einen nächsten Gang ohne Zugkraftunterbrechung durchgeführt werden.

Zum Durchführen von Schaltvorgängen in Doppelkupplungsgetrieben ist eine Reihe von Verfahren bekannt geworden.

Beispielsweise beschreibt die DE 103 49 220 A1 ein solches Verfahren, bei dem der Komfort dadurch verbessert wird, dass die Steuerung des Schaltvorganges im Getriebe vom Quellgang zum Zielgang und die Steuerung der zugeordneten Reibkupplungen derart erfolgt, dass die Motordrehzahl In Richtung auf die Synchrondrehzahl des Zielganges mit einem nahezu konstanten Gradienten zuläuft.

Das Dokument DE 10 2006 010 934 A1 schlägt vor, Schwingungen im aktiven und/oder im nicht aktiven Teilgetriebe durch Anlegen der zugehörigen Kupplung vor dem Durchführen der Synchronisierung im aktiven Teilgetriebe zu dämpfen, und eine Synchronisierung anschließend durchzuführen.

Das Verfahren ist dazu ausgelegt, sogenannte Synchronschläge bei Rückschaltvorgängen (beispielsweise vom vierten in den zweiten Gang) zur vermeiden.

Das Dokument DE 10 2006 002 490 befasst sich mit einer ähnlichen Problematik und offenbart ein Verfahren zum Durchführen einer Doppel-Zugrückschaltung, wobei zwischenzeitlich ein Gang eingelegt wird, dessen Stufung zwischen der des Quellganges und des Zielganges liegt.

Dabei soll es möglich sein, während des Einlegens des Zwischenganges über die dem freien Teilgetriebe zugeordnete Reibkupplung einen Momentenstoß in dieses Teilgetriebe zu übertragen, um dadurch annähernd auf die Zieldrehzahl zu beschleunigen, ähnlich einem! Zwischenkuppeln, wie es vor der Einführung von Syhchronisierüngen beim Rückschälten von Handschaltgetrieben notwendig war.

Ausgehend hiervon besteht das der Erfindung zugrunde liegende Problem darin, die Schaltablaufe bei Doppelkupplungsgetrieben weiter zu optimieren.

Die obige Aufgabe wird gelöst durch ein Verfahren zum Steuern eines Doppel-Hochschaltvorganges in ein Doppelkupplungsgetriebe gemäß Anspruch 1.

Bevorzugt Ausführungsformen sind in den Unteransprüchen angegeben.

Es ist zu erkennen, dass sich bei Mehrfach-Hochschaltungen, insbesondere bei Doppel-Hochschaltungen (beispielsweise von eins nach drei, von zwei nach vier, von drei nach fünf, von vier nach sechs, etc.) die von den Synchronisierungen des jeweiligen Zielganges aufzuwendende synchronisierungsarbeit wesentlich verringern lässt. Die Differenzdrehzahlen bzw. Reibgeschwindigkeiten an den Synchronisierungen der Zielgänge können jeweils auf Werte verringert werden, die es ermöglichen, vergleichsweise kostengünstige und kompakte Synchronisierungen zu verwenden.

Eine Hochschaltung von einem niedrigen Quellgang in einen höheren Zielgang soll auch beinhalten, vom Rückwärtsgang in einen Vorwärtsgang zu schalten. Bei dieser Ausführungsform können sich ebenfalls relativ hohe Differenzdrehzahlen an der Synchronisierung des Zielganges ergeben, und zwar aufgrund der Drehzahlumkehr in der Rückwärtsgangstufe.

Generell lässt sich das erfindungsgemäße steuerverfahren bei Doppelkupplungsgetrieben bei jedem Hochschaltvorgang anwenden. Erfindungsgemäß wird das Verfahren jedoch in Abhängigkeit von bestimmten Betriebszuständen des Fahrzeugs nur dann durchgeführt wird, wenn eine Verringerung der Differenzdrehzahl an der Synchronisterung des Zielganges tatsächlich erforderlich oder vorteilhaft ist. Hierdurch können in anderen Betriebszuständen die Schaltzeiten verkurzt werden und die Abnutzung der getriebeeingangsseitigen Reibkupplungen verringert werden.

So ist es besonders bevorzugt, wenn der Andrückvorgang nur dann durchgeführt wird, Wenn die Differenzdrehzahl größer ist als ein bestimmter Schwellenwert.

Die Differenzdrehzahl hängt ab von der Drehzahl der Doppelkupplungsgetriebe-Eingangswelle (d.h. der Drehzahl des Antriebsmotors) und von dem Gangstufensprung; der mit dem Schaltvorgang eingeleitet werden soll. Insbesondere dann, wenn ein Hochschaltvorgang aus einem Quellgang durchgeführt werden soll, wenn die Antriebsmotordrehzahl sehr hoch ist (beispielsweise bei einem starken Beschleunigungsvorgang), kann die Durchführung des erfindungsgemäßen Verfahrens vorteilhaft sein.

Gemäß einer weiteren bevorzugten Ausführungsform wird der Andrückvorgang nur dann durchgeführt, wenn die Reibgeschwindigkeit eines Reibringes (z.B. Synchronringes) der Zielschaltkupplung größer ist als ein bestimmter Schwellenwert.

Die Reibgeschwindigkeit des Reibringes der Zielschaltkupplung ist die Umfangsgeschwindigkeit des Reibringes an der Reibstelle (Synchronstelle). Die Reibgeschwindigkeit ist in der Regel direkt proportional zu der oben genannten Differenzdrehzahl. Die Reibgeschwindigkeit ist jedoch ein gutes Kriterium, um die Notwendigkeit des Andrückvorganges (der nachstehend auch ggf. als Zwischenkuppeln bezeichnet wird) festzustellen.

Insgesamt ist es ferner vorteilhaft, wenn der Andrückvorgang nur dann durchgeführt wird, wenn die Drehzahl des einen Teilgetriebes größer ist als die Drehzahl der Doppelkupplungsgetriebe-Eingangswelle.

Bei einem Hochschaltvorgang ist ein solches Zwischenkuppeln nur dann sinnvoll, wenn dadurch die Differenzdrehzahl abgebaut wird. Durch die Überwachung der Drehzahl des einen Teilgetriebes und die Überwachung der Drehzahl der Doppelkupplungsgetriebe-Eingangswelle lässt sich folglich feststellen, ob ein Zwischenkuppeln sinnvoll ist (oder sogar schädlich wäre).

Unter der Drehzahl des einen Teilgetriebes wird dabei vorliegend generell die Eingangsdrehzahl dieses Teilgetriebes verstanden, also die Drehzahl des Ausgangsgliedes der zugeordneten Reibkupplung.

Bei einem Hochschaltvorgang liegt die Zieldrehzahl in der Regel unterhalb der Drehzahl der Eingangwelle des einen Teilgetriebes. Diese Drehzahl fällt aufgrund der eigenen Trägheit. Dieser Drehzahlabfall aufgrund der eigenen Trägheit kann jedoch in manchen Momenten zu langsam erfolgen, um zu einer angemessenen Reibgeschwindigkeit zu gelangen. In diesen Fällen kann das erfindungsgemäße Verfahren angewendet werden.

Insgesamt ist es ferner vorteilhaft, wenn das auf das eine Teilgetriebe übertragene Schleppmoment allmählich aufgebaut wird.

Hierdurch können Stöße im Antriebsstrang verringert werden.

Dabei ist es von besonderem Vorteil, wenn das Schleppmoment rampen- bzw. stufenförmig aufgebaut wird.

Der Aufbau kann einer linearen Kennlinie folgen oder auch einer parabelförmigen Kennlinie.

Gemäß einer weiteren insgesamt bevorzugten Ausführungsform wird der Andrückvorgang beendet, wenn eine vorbestimmte Abbruchbedingung erfüllt ist.

Die Abbruchbedingung beinhaltet generell, dass der Andrückvorgang nicht mehr notwendig oder nicht mehr zulässig ist.

Dies kann beispielsweise eine Überwachung der Reibgeschwindigkeit beinhalten. Wenn diese auf einen hinreichend niedrigeren Wert abgefallen ist oder abfallen wird, kann der Andrückvorgang beendet werden.

Dabei erfolgt das Beenden des Andrückvorganges vorzugsweise so, dass die Übertragung des Schleppmomentes auf das eine Teilgetriebe sprungartig beendet wird.

Hierdurch kann der Schaltvorgang insgesamt verkürzt werden.

Gemäß einer alternativen Ausführungsform erfolgt das Beenden des Andrückvorganges so, dass die Übertragung des Schleppmomentes auf das eine Teilgetriebe allmählich, insbesondere rampenförmig bzw. stufenförmig beendet wird. Hierdurch können Stöße bzw. die Anregung von Schwingungen im Antriebsstrang verringert werden.

Von besonderem Vorzug ist es, wenn die Abbruchbedingung ein definierter Schwellenwert einer Änderungsrate einer Drehzahl des einen Teilgetriebes ist.

Dies kann beispielsweise die Drehzahl der Eingangswelle des Teilgetriebes sein.

Hierdurch wird erreicht, dass der Andrückvorgang frühest möglich beendbar ist. Wenn nämlich die Änderungsrate der Drehzahl des Teilgetriebes einen bestimmten Schwellenwert erreicht, kann davon ausgegangen werden, dass die Reibgeschwindigkeit sich ausgehend hiervon relativ schnell abbauen wird, so dass der Andrückvorgang möglichst früh beendet werden kann.

Insgesamt ist es bevorzugt, wenn das Synchronisieren des Zielganges erst dann erfolgt, nachdem die dem einen Teilgetriebe zugeordnete Reibkupplung nach dem zwischenzeitlichen Andrücken wieder geöffnet ist.

Hierdurch können Getriebeblockaden verhindert werden.

Ferner ist es vorteilhaft, wenn ein Aktuator für die dem einen Teilgetriebe zugeordnete Reibkupplung beim Übergeben der Antriebsleistung auf das andere Teilgetriebe diese Reibkupplung in einer Position kurz vor dem Anlagepunkt (Kiss- bzw. Touch-Punkt) hält, um das zwischenzeitliche Andrücken ggf. mit kürzerer Reaktionszeit durchführen zu können.

Mit anderen Worten wird die eine Reibkupplung nach dem Übergeben der Antriebsleistung auf das andere Teilgetriebe (zum Erhalt der Zugkraft über den Zwischengang) nicht vollständig geöffnet (bei einer hydraulisch betätigten Reibkupplung also nicht vollständig entleert). Vielmehr wird diese Reibkupplung des einen Teilgetriebes kurz vor dem Anlagepunkt gehalten, um den ggf. erforderlichen Andrückvorgang schnellstmöglich einleiten zu können.

Ferner ist es vorteilhaft, wenn der Quellgang unter Vorspannung ausgelegt wird, so dass die dem einen Teilgetriebe zugeordnete Reibkupplung nicht vollständig geöffnet werden muss, wenn die Antriebsleistung auf das andere Teilgetriebe übertragen wird.

Auch dies kann zu schnelleren Schaltvorgängen führen.

Mit anderen Worten wird der Aktuator zum Auslegen des Quellganges in Auslegerichtung vorgespannt. Sobald das über den Quellgang übertragene Drehmoment einen bestimmten Wert unterschreitet, wird der Quellgang aufgrund der Vorspannung ausgelegt, wobei die Reibkupplung des einen Teilgetriebes dabei noch nicht vollständig geöffnet sein muss. Ab dem Auslegen des Quellganges kann unmittelbar mit dem Übertragen der Antriebsleistung auf das andere Teilgetriebe begonnen werden, um Antriebsleistung über den Zwischengang zu übertragen.

Eine weitere besonders bevorzugte Ausführungsform sieht vor, die dem einen Teilgetriebe zugeordnete Reibkupplung bei dem zwischenzeitlichen Andrücken nicht mehr als 20 Nm, vorzugsweise nicht mehr als 15 Nm, insbesondere nicht mehr als 10 m übertragen zu lassen.

Es hat sich gezeigt, dass selbst ein Andrückvorgang, bei dem ein solch kleines Drehmoment von der Doppelkupplungsgetriebe-Eingangswelle auf das eine Teilgetriebe übertragen wird, hinreichend ist, um die Differenzdrehzahl an der Synchronisierung des Zielganges effektiv abzubauen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1        eine schematische Darstellung eines Doppelkupplungsgetriebes, an dem die erfindungsgemäßen Verfahren durchführbar sind, wobei ein Quellgang eingelegt ist;

Fig. 2 - 7    Ansichten des Doppelkupplungsgetriebes der Fig. 1 in unterschiedlichen Zuständen während der Durchführung eines erfindungsgemäßen Verfahrens zum Steuern eines Doppel-Hochschaltvorganges;

Fig. 8        eine Darstellung von Drehzahlen, Drehmomenten und Reibgeschwindigkeiten über der Zeit bei Durchführung eines erfindungsgemäßen Verfahrens zum Steuern eines Hochschaltvorganges;

Fig. 9 - 16   Darstellungen des Doppelkupplungsgetriebes der Fig. 1 in unterschiedlichen Phasen während einer Durchführung einer weiteren Ausführungsform des erfindungsgemäßen Verfahrens zum Steuern eines Hochschaltvorganges, und zwar bei einer Vierfach-Hochschaltung;

Fig. 17       eine Darstellung eines Flussdiagrammes zum Durchführen des erfindungsgemäßen Steuerverfahrens und eine Darstellung der hierbei abgefragten Bedingungen;

Fig. 18       eine schematische Darstellung eines Radsatzes einer Zielgangstufe zur Veranschaulichung der Drehzahlen und der Reibgeschwindigkeit;

Fig. 19       Tabellen unterschiedlicher Schaltvorgänge bei unterschiedlichen Drehzahlniveaus zur Verdeutlichung der Vorteile des erfindungsgemäßen Steuerverfahrens; und

Fig. 20       Darstellungen von Drehzahlsprüngen und Reibgeschwindigkeiten bei Hochschaltvorgängen in einem Doppelkupplungsgetriebe ohne und mit Anwendung des erfindungsgemäßen Verfahrens.

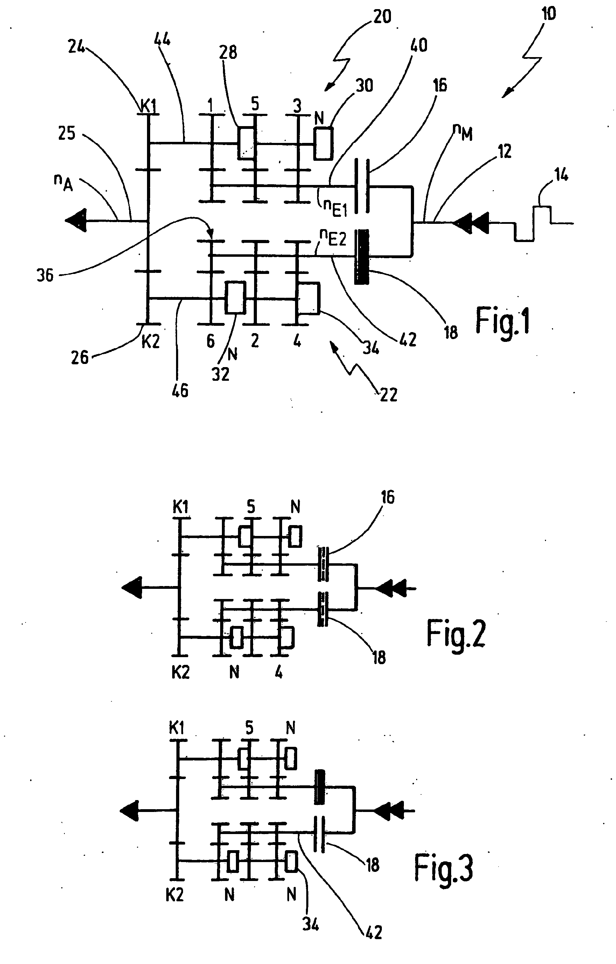

In Fig. 1 ist ein Doppelkupplungsgetriebe in schematischer Form dargestellt und mit 10 bezeichnet.

Das Doppelkupplungsgetriebe 10 weist eine Doppelkupplungsgetriebe-Eingangswelle 12 auf, die mit der Kurbelwelle eines Antriebsmotors 14 (wie eines Verbrennungsmotors) verbunden ist.

Das Doppelkupplungsgetriebe beinhaltet eine erste Reibkupplung 16 und eine zweite Reibkupplung 18. Die Eingangsglieder der zwei Reibkupplungen 16, 18 sind mit der Doppelkupplungsgetriebe-Eingangswelle 12 verbunden. Deren Drehzahl ist in Fig. 1 mit $n_M$ bezeichnet.

Ein Ausgangsglied der ersten Reibkupplung 16 ist mit einem ersten Teilgetriebe 20 verbunden. Das erste Teilgetriebe 20 beinhaltet die Gangstufen 1, 3 und 5 und ist in Vorgelegebauweise ausgeführt. Ein Ausgangsglied der zweiten Reibkupplung 18 ist mit einem zweiten Teilgetriebe 22 verbunden, das die Gangstufen 2, 4, 6 beinhaltet und ebenfalls in Vorgelegebauweise ausgeführt ist.

Aus Gründen einer einfachen Darstellung ist eine Rückwärtsgangstufe nicht dargestellt. Diese kann entweder dem ersten oder dem zweiten Teilgetriebe 20, 22 zugeordnet sein.

Das erste Teilgetriebe 20 ist über einen ersten Konstanten-Radsatz 24 mit einer Doppelkupplungsgetriebe-Ausgangswelle 25 verbunden, deren Drehzahl mit $n_A$ bezeichnet ist. In entsprechender Weise ist das zweite Teilgetriebe 22 über einen zweiten Konstanten-Radsatz 26 mit der Doppelkupplungsgetriebe-Ausgangswelle 25 verbunden.

Die Doppelkupplungsgetriebe-Ausgangswelle 25 kann beispielsweise über ein Differenzialgetriebe mit Antriebsrädern eines Kraftfahrzeuges verbunden sein, beispielsweise eines Personenkraftwagens oder auch eines Nutzfahrzeugs.

Das erste Teilgetriebe 20 weist ein erstes Schaltkupplungspaket 28 zur Betätigung der Gangstufen 1 und 5 auf. In Fig. 1 ist gezeigt, dass das Schaltkupplungspaket 28 so geschaltet ist, dass die Gangstufe 5 eingelegt ist. Ferner weist das erste Teilgetriebe 20 eine Schaltkupplung 30 für die Gangstufe 3 auf.

Das zweite Teilgetriebe 22 weist ein Schaltkupplungspaket 32 für die Gangstufen 2/6 sowie eine Schaltkupplung 34 für die Gangstufe 4 auf. Im vorliegenden Fall ist gezeigt, dass die Schaltkupplung 34 so geschaltet ist, dass die Gangstufe 4 eingelegt ist.

Ferner ist in Fig. 1 dargestellt, dass die zweite Reibkupplung 18 geschlossen ist. Demzufolge wird Antriebsleistung von dem Antriebsmotor 14 über die zweite Reibkupplung 18 und das zweite Teilgetriebe 22 auf die Doppelkupplungsgetriebe-Ausgangswelle 25 übertragen, und zwar über die Gangstufe 4. In dem anderen Teilgetriebe 20 ist die Gangstufe 5 vorgewählt, da das Fahrzeug sich in einem Beschleunigungsvorgang befindet. Sofern das Fahrzeug verzögert würde, könnte bspw. auch die Gangstufe 3 in dem ersten Teilgetriebe 20 vorgewählt werden (in Abhängigkeit von der Gangvorwahlstrategie).

Das erste Teilgetriebe 20 weist eine erste Getriebeeingangswelle 40 auf, die mit dem Ausgangsglied der ersten Reibkupplung 16 verbunden ist. Die Drehzahl der ersten

Getriebeeingangswelle 40 ist mit $n_{E1}$ bezeichnet. In entsprechender Weise weist das zweite Teilgetriebe 22 eine zweite Getriebeeingangswelle 42 auf, deren Drehzahl mit $n_{E2}$ bezeichnet ist.

Das erste Teilgetriebe 20 weist eine erste Getriebeausgangswelle 44 auf, an der die Schaltkupplungen 28, 30 gelagert sind und die mit dem ersten Konstanten-Radsatz 24 verbunden ist. In entsprechender Weise weist das zweite Teilgetriebe 22 eine zweite Getriebeausgangswelle 46 auf, an der die Schaltkupplungen 32, 34 ausgebildet sind und die mit dem zweiten Konstanten-Radsatz 26 verbunden ist.

Das Doppelkupplungsgetriebe 10 ist, wie dargestellt, mit Ausgangskonstanten-Radsätzen 24, 26 ausgebildet. In gleicher Weise könnte das Doppelkupplungsgetriebe 10 mit eingangsseitigen Konstanten-Radsätzen ausgebildet sein. Ferner kann das Doppelkupplungsgetriebe 10 für den Quer- oder für den Längseinbau in einem Fahrzeug ausgelegt sein. Die Anordnung der Gangstufen innerhalb der jeweiligen Teilgetriebe 20, 22 ist vorliegend rein willkürlich gewählt. Andere Anordnungen (insbesondere axiale Anordnungen) sind in gleicher Weise möglich.

In den Fig. 2 bis 7 werden aufeinanderfolgende Zustände des Doppelkupplungsgetriebes 10 bei einem Hochschaltvorgang von der Gangstufe 4 in die Gangstufe 6 gezeigt, wobei das erfindungsgemäße Steuerverfahren angewendet wird.

Ausgehend von dem Zustand der Fig. 1 überträgt das Doppelkupplungsgetriebe 10 Antriebsleistung über die Gangstufe 4, wobei von einem relativ hohen Drehzahlniveau des Antriebsmotors 14 auszugehen ist (beispielsweise $n_M$ = 6500 Umdrehungen pro Minute). In dem anderen Teilgetriebe 20 ist die Gangstufe 5 vorgewählt.

In Fig. 2 ist ein Zustand gezeigt, bei dem ein Überblendvorgang von dem zweiten Teilgetriebe 22 auf das erste Teilgetriebe 20 stattfindet, indem die zweite Kupplung 18 geöffnet und die erste Kupplung 16 geschlossen wird. Derartige überschneidende Steuervorgänge der Reibkupplungen 16, 18 sind für Doppelkupplungsgetriebe charakteristisch und werden vorliegend nicht im Detail beschrieben.

In Fig. 3 ist ein Zustand gezeigt, bei dem die zweite Reibkupplung 18 vollständig geöffnet ist. In diesem Zustand wird die Antriebsleistung über die Gangstufe 5 des ersten Teilgetriebes 20 auf die Doppelkupplungsgetriebe-Ausgangswelle übertragen. Ferner wird zu diesem Zeitpunkt die Schaltkupplung 34 betätigt, um die Gangstufe 4 auszulegen (Einrichtung der Neutralposition N). Ab diesem Zeitpunkt ist die zweite Getriebeeingangswelle 42 nicht mehr in den Leistungsfluss eingebunden, und deren Drehzahl fällt allein aufgrund der Eigenreibung bzw. der Radsatzreibung ab. Da die Drehzahl der zweiten Getriebeeingangswelle 42 zu diesem Zeitpunkt relativ hoch war (in der Größenordnung der oben angegebenen 6500 Umdrehungen pro Minute), herrscht an der Schaltkupplung 32 für die Zielgangstufe 6 eine relativ hohe Differenzdrehzahl, obgleich die Drehzahl $n_M$ des Antriebsmotors aufgrund des Hochschaltvorganges von dem vierten in den fünften Gang bereits abgesenkt worden ist.

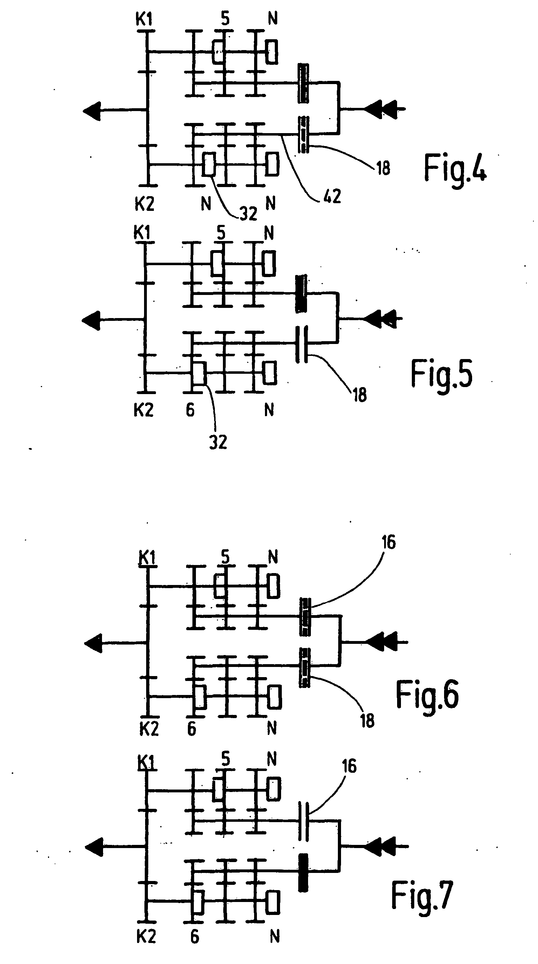

In Fig. 4 ist ein Zustand gezeigt, bei dem die zweite Reibkupplung 18 nun kurzzeitig angedrückt wird, bevor die Schaltkupplung 32 zum Einlegen der Gangstufe 6 betätigt wird. Durch die verringerte Drehzahl an der Doppelkupplungsgetriebe-Eingangswelle 12 wird hierdurch ein Schleppmoment auf die zweite Getriebeeingangswelle 42 ausgeübt, wodurch diese relativ stark abgebremst wird. Dieser Vorgang wird auch als "Zwischenkuppeln" bezeichnet.

Anschließend wird die zweite Reibkupplung 18 wieder geöffnet, wie es in Fig. 5 gezeigt ist, und anschließend wird die Schaltkupplung 32 betätigt, um die Gangstufe 6 einzulegen.

In Fig. 6 wird wiederum ein Überblendvorgang dargestellt, bei dem die Kupplungen 16, 18 involviert sind, um die Antriebsleistung von dem ersten Teilgetriebe (in dem nach wie vor die Gangstufe 5 eingelegt ist) auf das zweite Teilgetriebe 22 zu übergeben (in dem die sechste Gangstufe eingelegt ist).

In Fig. 7 ist der Hochschaltvorgang beendet, wobei die Reibkupplung 18 nunmehr vollständig geschlossen ist und die erste Reibkupplung 16 vollständig geöffnet ist. Die Antriebsleistung wird nunmehr über das zweite Teilgetriebe 22 (Gangstufe 6) auf die Doppelkupplungsgetriebe-Ausgangswelle 25 übertragen. In dem ersten Teilgetriebe 22 kann die Gangstufe 5 eingelegt bleiben oder ausgelegt werden.

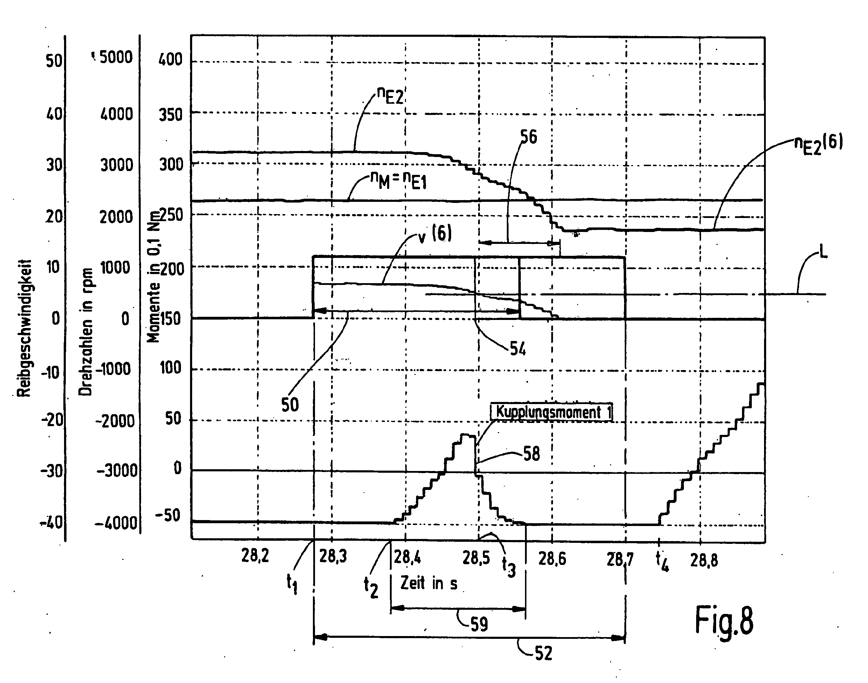

Ein derartiger Hochschaltvorgang ist in Fig. 8 in schematischer Form dargestellt. Die Darstellung geht aus von dem Zustand der Fig. 3, bei dem bereits der Zwischengang eingelegt ist und über den Antriebsleistung übertragen wird. Demzufolge ist die Drehzahl $n_M$ der Doppelkupplungsgetriebe-Eingangswelle 12 gleich der Drehzahl $n_{E1}$ der ersten Getriebeeingangswelle 40. Die Drehzahl $n_{E2}$ liegt demgegenüber höher. Dieser relativ hohe Wert führt dazu, dass die Reibgeschwindigkeit v (6) an der Synchronisierung des sechsten Ganges zu einem Zeitpunkt $t_1$ noch relativ hoch ist. Ab diesem Zeitpunkt bis zum Zeitpunkt $t_3$ ist Zwischenkuppeln durch Andrücken der Reibkupplung des freien Teilgetriebes (Reibkupplung 18 im obigen Beispiel) möglich. Die Reibgeschwindigkeit v (6) ist so hoch, dass ein Synchronisieren nicht erlaubt ist, da die Reibgeschwindigkeit v (6) eine Schwelle L noch nicht unterschritten hat.

Aus diesem Grund wird zum Zeitpunkt $t_2$ ein Zwischenkuppeln eingeleitet, indem die Reibkupplung des freien Teilgetriebes (Reibkupplung 18) angedrückt wird. Das hierdurch auf die Getriebeeingangswelle 42 des freien Teilgetriebes übertragene Schleppmoment 58 wird dabei allmählich erhöht, und zwar rampenförmig, wie es ab dem Zeitpunkt $t_2$ gezeigt ist, bis hin zu einem Maximalwert. Kurz vor dem Zeitpunkt $t_3$ ist eine Abbruchbedingung für das Zwischenkuppeln erfüllt. Dabei wird die Änderungsrate der Drehzahl $n_{E2}$ überwacht. Sobald diese Änderungsrate einen bestimmten Schwellenwert erreicht hat (kurz vor $t_3$), wird das Zwischenkuppeln abgebrochen, indem das Schleppmoment 58 wieder abgebaut wird. Dies kann sprungartig erfolgen, erfolgt jedoch gemäß der Darstellung in Fig. 8 ebenfalls allmählich nach der Form einer Rampe bzw. Parabel.

Ab dem Zeitpunkt $t_3$, vorzugsweise jedoch nach dem vollständigen Abbau des Schleppmomentes 58, kann dann die Synchronisierung des sechsten Ganges betätigt werden. Sobald der sechste Gang eingelegt ist, kann danach (zum Zeitpunkt $t_4$) der Überblendungsvorgang stattfinden, bei dem Antriebsleistung von dem ersten Teilgetriebe 20 auf das zweite Teilgetriebe 22 übertragen wird, wobei die Reibkupplung 18 betätigt wird, wie es durch den rampenförmigen Momentenaufbau ab dem Zeitpunkt $t_4$ gezeigt ist.

In Fig. 1 ist bei 50 ein Zeitraum gezeigt, innerhalb dessen ein Zwischenkuppeln erlaubt ist. Bei 52 ist ein Zeitraum gezeigt, innerhalb dessen ein Zwischenkuppeln notwenig ist. Dabei wird am Anfang des Zeitraumes 52 ein Flag gesetzt, wenn das Zwischenkuppeln notwendig ist. Dieses wird erst zurückgesetzt, wenn ein neuer Gangwechsel gestartet wird. Der Zeitraum 52 entspricht folglich dem gesetzten Flag.

Bei 54 ist ein Zeitpunkt gezeigt, bei dem die Reibgeschwindigkeit v (6) einen vorbestimmten Schwellenwert unterschritten hat. Ab diesem Zeitpunkt ist ein Synchronisieren des Zielganges möglich. Vorher ist ein Synchronisieren nicht erlaubt.

Bei 56 ist ein Zeitfenster gezeigt, innerhalb dessen die Synchronisierung des Zielganges aktiv sein kann. Nach Ablauf der Zeitspanne 56, die sich an den Zeitpunkt 54 anschließt, ist die Reibgeschwindigkeit v des Zielganges auf null abgebaut, der Zielgang ist synchronisiert.

Das Drehmoment, das von der Reibkupplung übertragen wird, die dem freien Teilgetriebe des Zielganges zugeordnet ist, ist bei 58 gezeigt.

Zum Zeitpunkt $t_1$ sind die Bedingungen zum Zwischenkuppeln sämtlich erfüllt, so dass etwas später zum Zeitpunkt $t_2$ das Aufbringen des Schleppmomentes auf die Getriebeeingangswelle des freien Teilgetriebes erfolgt, und zwar während einer Zwischenkuppelphase 59. Innerhalb dieser Zwischenkuppelphase 59 wird zum Zeitpunkt 54 ($t_3$) die Reibgeschwindigkeit v den Schwellenwert L unterschreiten, so dass ab diesem Zeitpunkt ein Synchronisieren des Zielganges möglich ist (während der Phase 56). Die Verzögerung von $t_1$ nach $t_2$ kommt dadurch zustande, dass kein Zwischenkuppelmoment angelegt wird, solange der Quellgang nicht ausgelegt ist. Dieses Verhalten ist kalibrierbar abschaltbar.

Die obige Beschreibung eines erfindungsgemäßen Steuerverfahrens eines Hochschaltvorganges eines Doppelkupplungsgetriebes bezieht sich beispielsweise auf das Beispiel der Fig. 1 bis 7, bei dem von der Gangstufe 4 in die Gangstufe 6 hochgeschaltet wird. Das Diagramm der Fig. 8 ist jedoch qualitativ zu verstehen und ist dementsprechenderweise auch auf andere Schaltvorgänge (beispielsweise von 1 nach 3, von 2 nach 4, von 2 nach 6, etc.) anwendbar.

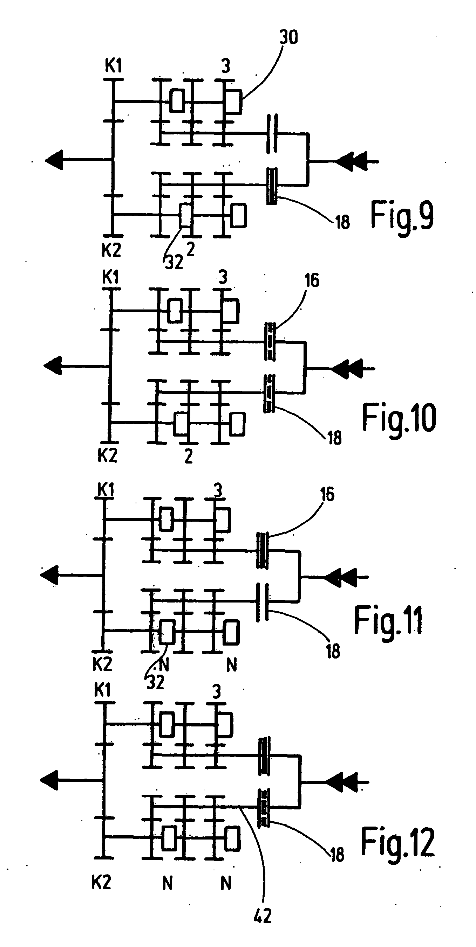

In den Fig. 9 bis 16 wird demgemäß ein weiteres Beispiel eines erfindungsgemäßen Steuerverfahrens für einen Hochschaltvorgang von der Gangstufe 2 in die Gangstufe 6 gezeigt. Das zu dieser Darstellung verwendete Doppelkupplungsgetriebe entspricht jenem der Fig. 1 bis 7.

In Fig. 9 wird von einem Zustand ausgegangen, bei dem die Gangstufe 2 eingelegt ist und Antriebsleistung über das zweite Teilgetriebe 22 übertragen wird. In dem ersten Teilgetriebe ist die Gangstufe 3 vorgewählt.

In Fig. 10 erfolgt ein Überblendvorgang auf das erste Teilgetriebe, so dass in Fig. 11 Antriebsleistung über das erste Teilgetriebe und die Gangstufe 3 auf den Abtrieb übertragen wird. Die Reibkupplung 18 wird geöffnet, die Gangstufe 2 wird mittels der Schaltkupplung 32 ausgelegt.

In Fig. 12 erfolgt das Zwischenkuppeln mittels der Reibkupplung 18, wodurch die Drehzahl der Getriebeeingangswelle 42 abgesenkt wird.

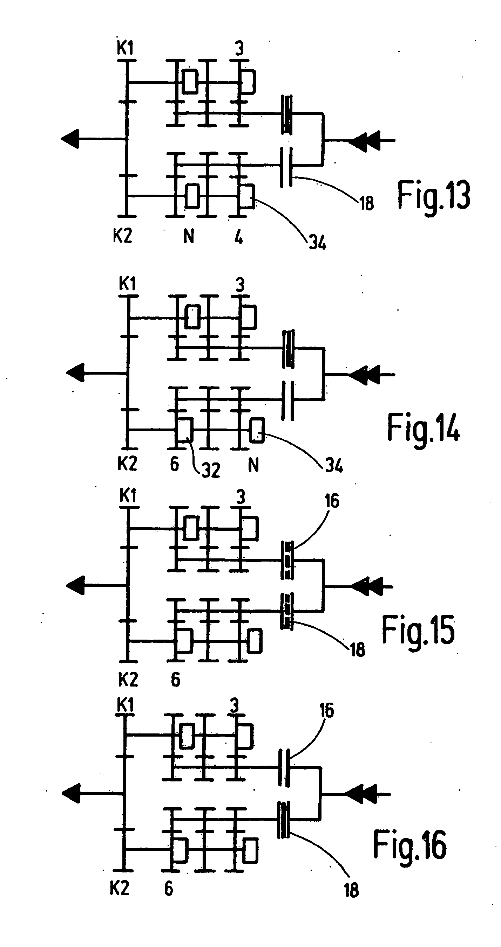

In Fig. 13 wird bei verringerter Reibgeschwindigkeit an der Synchronisierung des vierten Ganges die Gangstufe 4 eingelegt (Schaltkupplung 34). Hierdurch wird zunächst die Synchronisierung des vierten Ganges verwendet, um die Drehzahl der zweiten Getriebeeingangswelle 42 noch weiter abzusenken. Im Schritt der Fig. 14 wird die Gangstufe 4 mittels der Schaltkupplung 34 wieder ausgelegt und die Gangstufe 6 mittels der Schaltkupplung 32 eingelegt.

In Schritt 15 erfolgt wieder der Überblendvorgang, bei dem die Antriebsleistung von dem ersten Teilgetriebe (mit Gangstufe 3) auf das zweite Teilgetriebe (mit Gangstufe 6) übergeben wird.

In Fig. 16 ist die Reibkupplung 16 wieder geöffnet, so dass die Gangstufe sechs nunmehr der Fahrgang ist.

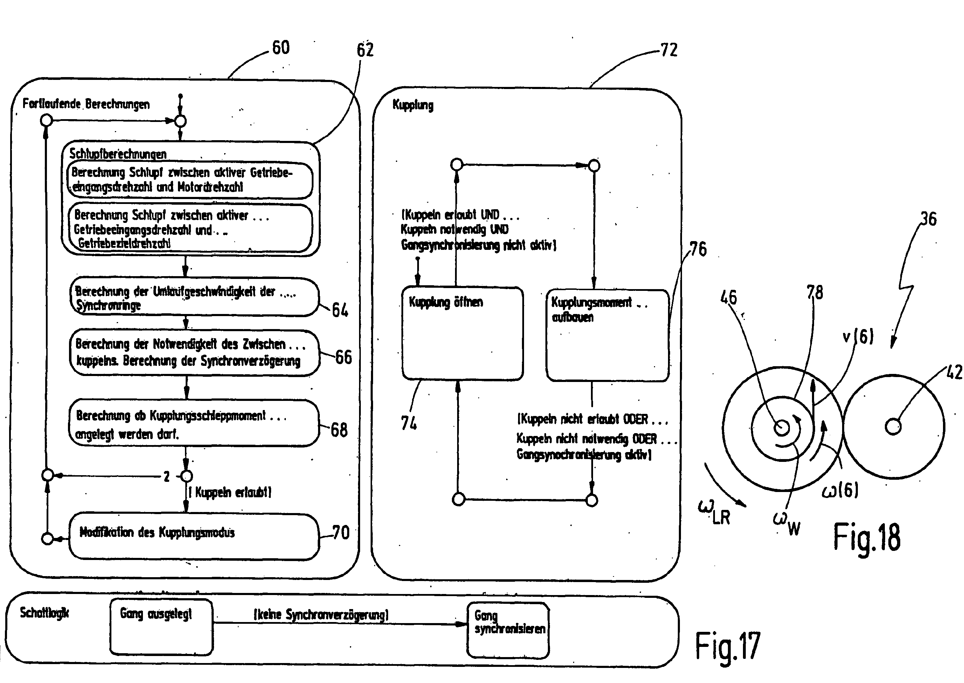

In Fig. 17 ist bei 60 ein Flussdiagramm gezeigt, das zum Einleiten eines Zwischenkuppelvorganges durchgeführt wird.

Im Schritt 62 erfolgen zunächst Schlupfberechnungen, insbesondere eine Berechnung des Schlupfes zwischen der Drehzahl der jeweiligen Getriebeeingangswelle und der Motordrehzahl, sowie eine Berechnung des Schlupfes zwischen der Drehzahl der Getriebeeingangswelle und der aufgrund des Zielganges zu realisierenden Drehzahl jener Getriebeeingangswelle.

Aus diesem Schlupf wird die Umlaufgeschwindigkeit der Synchronringe des Zielganges berechnet, d.h. die Reibgeschwindigkeit v.

Im Schritt 66 wird berechnet, ob ein Zwischenkuppeln notwendig ist, und es wird die Synchronverzögerung berechnet. Im Schritt 68 wird festgestellt, ob ein Kupplungsschleppmoment zum Zwecke des Reduzierens der Drehzahl der Getriebeeingangswelle angelegt werden darf.

Wenn dies nicht der Fall ist, wird das Flussdiagramm erneut durchlaufen. Wenn dies der Fall ist, wird im Schritt 70 der Kupplungsmodus modifiziert (bzw. das Zwischenkuppeln eingeleitet).

Bei 72 ist ein Kupplungssteuermodul gezeigt, das im Zustand 74 von einer geöffneten Kupplung ausgeht. Wenn ausgehend von diesem Zustand ein Zwischenkuppeln erlaubt ist und ein Zwischenkuppeln notwendig ist sowie die Gangsynchronisierung des Zielganges nicht aktiv ist, wird im Zustand 76 ein Kupplungsschleppmoment aufgebaut. Anschließend wird überwacht, ob sich in der Zwischenzeit eine der obigen Bedingungen geändert hat. Wenn folglich ein Kuppeln nicht mehr erlaubt ist oder ein Kuppeln nicht mehr notwendig ist oder aber die Gangsynchronisierung des Zielganges aktiv ist, wird die Kupplung wieder geöffnet, so dass der Zustand 74 erreicht wird.

Fig. 18 ist eine schematische Darstellung eines Radsatzes einer Gangstufe des Doppelkupplungsgetriebes 10 (im vorliegenden Fall des Radsatzes der sechsten Gangstufe).

Der Radsatz beinhaltet ein mit der Getriebeeingangswelle 42 fest verbundenes Festrad, das mit einem Losrad in Eingriff steht, das zunächst frei drehbar an der Getriebeausgangswelle 46 gelagert ist. Die Schaltkupplung 32 beinhaltet einen Reibring 78 (Synchronring).

Bei $\omega_w$ ist die Rotationsgeschwindigkeit der Getriebeausgangswelle 46 gezeigt. Bei $\omega_{LR}$ ist die Rotationsgeschwindigkeit des Losrades des Radsatzes 36 gezeigt. Bei $\omega(6)$ ist in schematischer Form die Differenz-Rotationsgeschwindigkeit gezeigt, die an dem Reibring 78 vorliegt. Bei $v(6)$ ist die Reibgeschwindigkeit gezeigt, die sich am Eingriffspunkt des Reibringes 78 ergibt, also die Umfangsgeschwindigkeit an der Synchronstelle.

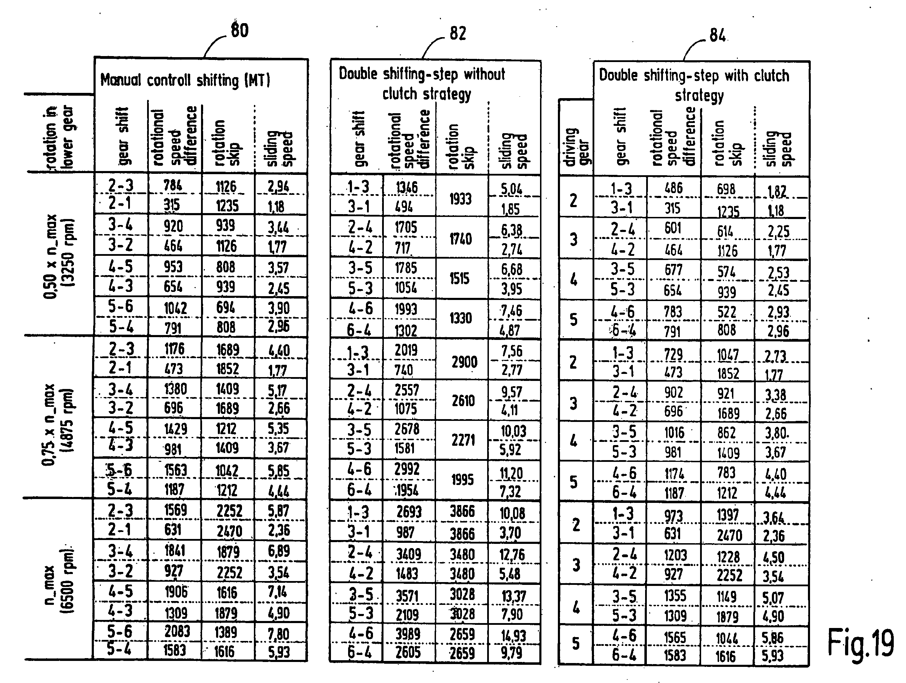

Fig. 19 beinhaltet drei Tabellen, die darstellen, bei welchen Gangwechseln ein Zwischenkuppeln besonders vorteilhaft ist.

In den Tabellen sind englische Bezeichnungen angegeben, die sich wie folgt übersetzen lassen:

| | |
|---|---|
| • Rotation in low gear | Drehzahl an niedrigerer Gangstufe |
| • manual control shifting | Schalten mit manueller Steuerung |
| • double shifting step without clutch strategy | Doppelschaltvorgang ohne Kupplungsstrategie |
| • double shifting-step with clutch strategy | Doppelschaltvorgang mit Kupplungsstrategie |
| • gear shift | Schaltvorgang |
|     • rotational speed difference | Drehzahldifferenz |
| • rotation skip | Drehzahlsprung |
| • sliding speed | Reibgeschwindigkeit |

Man erkennt, dass die Reibgeschwindigkeit insbesondere bei den Gangwechseln 3-5, 4-6 (selbst bei nur dem 0,75-fachen der Maximaldrehzahl an der unteren Gangstufe) relativ hoch ist (10,03 bzw. 11,20), wenn kein Zwischenkuppeln stattfindet. Gleiches gilt für die Gangwechsel 1-3, 2-4, 3-5 und 4-6, wenn bei Maximaldrehzahl in der unteren Gangstufe der Schaltvorgang eingeleitet wird.

Wenn hingegen eine Kupplungsstrategie zugelassen wird, also ein Zwischenkuppeln stattfinden kann, wie in Tabelle 84 gezeigt, ist zu erkennen, dass die Reibgeschwindigkeit an den Zielsynchronisierungen selbst bei den oben genannten extremen Gangwechseln deutlich reduziert ist, so dass die Synchronisierungen geschont werden bzw. weniger voluminös ausgeführt werden müssen.

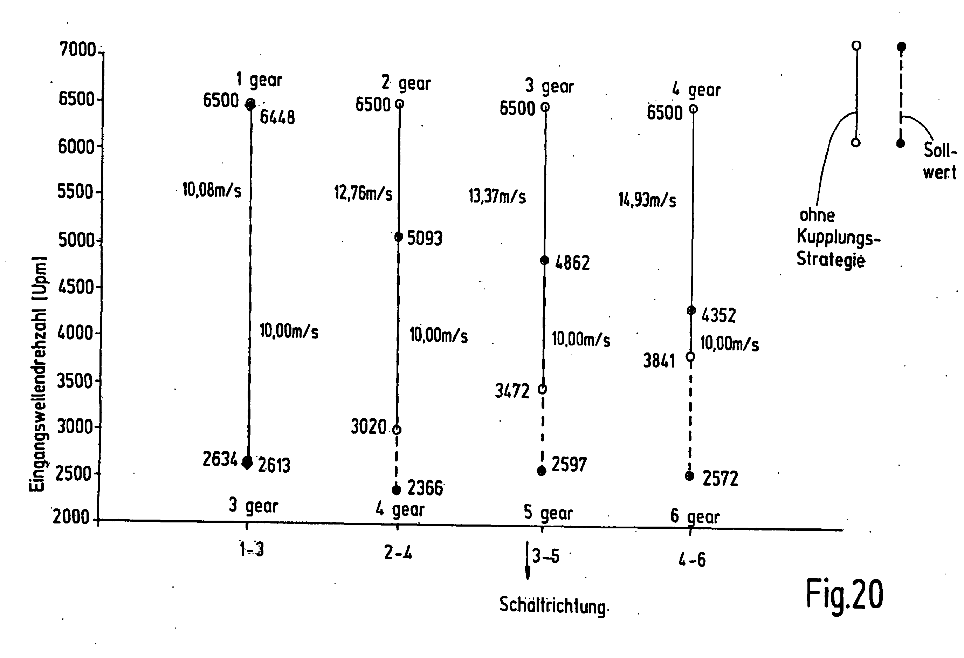

Fig. 20 schließlich zeigt die Drehzahlsprünge bei den Gangwechseln 1-3, 2-4, 3-5, 4-6, und zwar in der grauen Darstellung, genauer gesagt die Drehzahlsprünge ohne Kupplungsstrategie, die sich auch der Tabelle 82 entnehmen lassen. Schwarz gestrichelt sind die Drehzahlsprünge gezeigt, die ohne Zwischenkupplungsstrategie und unter Berücksichtigung einer maximalen Gleitgeschwindigkeit von 10 m/s erlaubt sind. Mit Zwischenkuppelstrategie, wie aus Tabelle 84 zu entnehmen ist, kommt man über eine Gleitgeschwindigkeit von 5,93 m/s nicht hinaus.

Während oben einige Ausführungsformen von erfindungsgemäßen Steuerverfahren beschrieben worden sind, sind auch folgende Modifikationen möglich.

So ist das erfindungsgemäße Steuerverfahren auch auf Schaltvorgänge anwendbar, bei denen der Rückwärtsgang involviert ist. Hierbei kann die Notwendigkeit eines Zwischenkuppelns ggf. sogar noch größer sein, da hierbei relativ hohe Differenzdrehzahlen auftreten können (beispielsweise bei einer Synchronisierung vom Rückwärtsgang in den zweiten Gang).

Ferner kann ein Zwischenkuppeln auch beim Auftreten eines so genannten Einlegehängers erfolgen, wenn also bei Einleiten eines Schaltvorganges eine Schaltkupplung nicht durchschalten kann, um den Formschluss an dem zugeordneten Radsatz herzustellen. Dies kann aufgrund eines Verklemmens oder aufgrund einer versehentlichen Sperre der Sperrsynchronisierung erfolgen.

In diesem Fall wird ein solcher Einlegehänger bzw. eine Schaltblockade erfasst, indem beispielsweise die Kraft oder Energie überwacht wird, die zum Einlegen des Zielganges erforderlich ist. Wenn diese über einen längeren Zeitraum einen bestimmten Wert überschreitet, wird von einer Schaltblockade ausgegangen. In diesem Fall wird die eingangsseitige Reibkupplung des zugeordneten Teilgetriebes kurz angedrückt, wobei von dem Eingang des Getriebes ein Schleppmoment auf das Getriebe übertragen wird. Hierdurch wird die Zielschaltkupplung verdreht, wodurch die Schaltblockade in der Regel beseitigt wird. Anschließend kann mit einer neuen Synchronisierung der Zielschaltkupplung begonnen werden.

Ferner ist das erfindungsgemäße Verfahren nicht nur auf Hochschaltvorgänge anwendbar, sondern auch auf Rückschaltvorgänge, wie es beispielsweise den Tabellen 82 und 84 zu entnehmen ist. Beispielsweise bei einem Rückschaltvorgang von der Gangstufe 5 in die Gangstufe 3 kann die Reibgeschwindigkeit an der Zielschaltkupplung von 7,90 auf 4,90 reduziert werden.

Bei derartigen Rückschaltungen liegt die Zieldrehzahl höher als die Startdrehzahl. Durch Anlegen des Schleppmomentes wird das freie Teilgetriebe beschleunigt. Durch Wegnahme des Schleppmomentes kann die Getriebedrehzahl aufgrund der Eigenreibung wieder fallen. Durch geeignete Maßnahmen kann ein Pendeln des Anlegens des Kupplungsmomentes verhindert werden.

Ergänzend wird der technologische Hintergrund der Erfindung beschrieben.

Wesentlich für die Umsetzung des Algorithmus zum Anlegen des Schleppmomentes ist die kontinuierliche Berechnung der Reibgeschwindigkeit der betroffenen Reibringe (Synchronringe).

Diese Berechnung kann folgendermaßen erfolgen:

Abkürzungen:

| | |
|---|---|
| S | Start |
| T | Target |
| lim | Grenzwert |
| ins | input-shaft, Getriebeeingang |
| sync | Synchronisierung |

Formelzeichen:

| | | |
|---|---|---|
| Drehzahl in rpm: | $n$ | [rpm] |
| Einzelübersetzung: | $i$ | [-] |
| Übersetzung Konstante: | $k$ | [-] |
| Gesamtübersetzung: | $g$ | [-] |
| Drehzahlsprung: | $\Delta n_{ins}$ | [rpm] |
| Drehzahldifferenz: | $\Delta n_{sync}$ | [rpm] |
| Durchmesser Synchronring: | $d$ | [m] |
| Umfanggeschwindigkeit Synchronring: | $v$ | [m/s] |

Drehzahlsprung

Der Drehzahlsprung ist die Änderung der Getriebeeingangsdrehzahl beim Wechsel des Ganges von Startgang auf Zielgang. Der Drehzahlsprung berechnet sich wie folgt:

$$\Delta n_{ins} = n_s \bullet \frac{g_s - g_T}{g_s}$$

Drehzahldifferenz

Die Drehzahldifferenz ist der Unterschied der Drehzahl von zu schaltendem Losrad zur Drehzahl der zugehörigen Getriebeausgangswelle.

$$\Delta n_{sync} = \frac{n_s}{i_T} \bullet \frac{g_s - g_T}{g_s} = \frac{\Delta n_{ins}}{i_T}$$

Die Umfanggeschwindigkeit ist die Geschwindigkeit des Umfanges des Synchronringes an der Synchronstelle. Sie wird in diesem Dokument auch als Reibgeschwindigkeit bezeichnet.

$$v = \frac{\Delta n_{sync} \bullet \pi \bullet d}{60}$$

Die Reibgeschwindigkeit stellt das Kriterium für die Notwendigkeit des Zwischenkuppelns dar. Überschreitet sie einen Schwellwert, muss, um die Synchroneinheit zu schützen, zwischengekuppelt werden.

Ob die Aufbringung eines Schleppmoments an der Kupplung des freien Teilgetriebes einen Sychronisiervorgang unterstützt oder nicht, hängt von der aktuellen Drehzahlsituation ab.

Zwischenkuppeln ist nur dann sinnvoll, wenn dadurch die Differenzdrehzahl abgebaut wird. Durch das Zwischenkuppeln wird die Getriebeeingangsdrehzahl in Richtung der Motordrehzahl gezogen. Deshalb gilt:

Fall 1: Die Zieldrehzahl ist kleiner als die Startdrehzahl

Die Kupplung darf nur dann geschlossen werden, wenn die Getriebeeingangsdrehzahl noch über der Motordrehzahl liegt.

Fall 2: Die Zieldrehzahl ist größer als die Startdrehzahl

Die Kupplung darf nur dann geschlossen werden, wenn die Getriebeeingangsdrehzahl kleiner als die Motordrehzahl ist.

Die Reibgeschwindigkeit an der Synchronstelle wird kontinuierlich berechnet. Die Zwischenkuppelfunktion wird nur ausgelöst, wenn die Reibgeschwindigkeit über dem kritischen Wert liegt.

Beim Gangwechsel wird jeweils ein gewünschter Kupplungsmodus vor dem Gangwechsel und nach dem Gangwechsel angefordert. Da beim Zwischenkuppeln Moment von der Kupplung angefordert werden muss, wird bei aktivierter Zwischenkuppelfunktion ein Kupplungsmodus angefordert, der es erlaubt, während des Gangwechsels ein Kupplungsmoment anzulegen.

Die Schaltlogik muss dieses Moment tolerieren und dennoch beginnen, den Gangwechsel durchzuführen. Deshalb wird ein Signal berechnet, welches für kleine Kupplungsmomente einen Wahrwert liefert. Die Schaltlogik toleriert dieses kleine Kupplungsmoment für ihre Funktionen, außer beim Übergang zur Synchronisierung. Das Synchronisieren soll erst dann beginnen, wenn die Kupplung tatsächlich offen ist.

Weiterhin wird das Schleppmoment erst dann angefordert, wenn der Startgang ausgelegt ist. Das Schleppmoment der Kupplung bleibt solange angelegt, wie es physikalisch sinnvoll ist oder bis die kritische Reibgeschwindigkeit unterschritten ist.

Danach wird entweder der Synchronvorgang weiter verzögert, falls die Reibgeschwindigkeit immer noch zu hoch ist, oder der Gang synchronisiert. Eine Synchronisierverzögerung ohne angelegtes Schleppmoment ist nur dann möglich, wenn die Zieldrehzahl kleiner als die Startdrehzahl ist.

Das angeforderte Schleppmoment der Kupplung wird rampenförmig aufgebaut. Der Abbau des Moments geschieht sprungartig.

Falls es sich um eine Hochschaltung handelt, liegt die Zieldrehzahl unterhalb der Getriebeeingangsdrehzahl. In diesem Fall fällt das Teilgetriebe durch seine eigene Trägheit. Bei Erreichen einer definierten Schwelle der Änderungsrate der Drehzahl des freien Teilgetriebes kann dann das Schleppmoment der Kupplung weggenommen werden.

Bei Rückschaltungen liegt die Zieldrehzahl höher als die Startdrehzahl. Durch Anlegen des Schleppmoments wird das freie Teilgetriebe beschleunigt. Durch Wegnahme des Schleppmoments kann die Getriebedrehzahl auf Grund der Eigenreibung wieder fallen. Durch geeignete Maßnahmen wird ein Pendeln des Anlegens des Kupplungsmoments verhindert.

Das Anlegen des Schleppmoments zur Unterstützung des Synchronisiervorgangs findet parallel zu den Gangwechselvorgängen der Schaltlogik statt. Die Synchronverzögerung bewirkt, dass mit den Aktuatoren vor den Synchronpunkt gefahren und dort gewartet wird, bis die Freigabe zur Synchronisierung erfolgt.

Falls kein Zwischenkuppeln bei einem Gangwechsel notwendig ist, wird der Algorithmus nicht ausgeführt, um eine Mehrbelastung der Kupplungen so klein wie möglich zu halten.

Der Algorithmus zur Unterstützung der Gangsynchronisierung ist vollkommen deaktivierbar.

Varianten:

- Durch statistische Auswertung des Fahrverhaltens kann die kritische Reibgeschwindigkeit dynamisch angepasst werden und damit die Lebensdauer von Kupplungen und Synchroneinheiten optimiert werden.

- Durch Zwischenkuppeln bei Rückschaltungen können kürzere Gangwechselzeiten erreicht werden. Dies kann auch dann sinnvoll sein, wenn die kritische Reibgeschwindigkeit nicht überschritten wird. Die Synchronzeit kann bei bestimmten Gangwechseln durch die höhere Synchronleistung der Kupplung verkürzt werden. Die Synchronzeit entspricht bei Gangwechseln mit Zwischenkuppeln der Synchronzeit der Kupplung und der Synchronisierung bzw. bei Gangwechseln ohne Zwischenkuppeln nur der Synchronzeit der Synchronisierung.

- Bei Powershift-Zug-Hochschaltungen können durch einen nicht vollständigen Momentenabbau der öffnenden Kupplung bei Kupplungsüberblendung kürzere Gangwechselzeiten erreicht werden. Der Startgang wird dabei unter Vorspannung ausgelegt, so dass die Kupplung für das Zwischenkuppeln nicht vollständig geöffnet werden muss. Dadurch wird die Zeit für das vollständige Öffnen und das Anfahren der Zwischenkuppelposition gespart.

- Ein rampenförmiger Abbau des Kupplungsschleppmoments (anstelle des oben beschriebenen sprungförmigen Abbaus) ist möglich, um die Kupplungsaktuatoren zu schonen.

- Solange kein Schleppmoment angefordert wird, aber Algorithmus aktiv ist, sollte die Kupplung vor dem Touchpoint gehalten werden anstatt in Ablageposition, um schnellere Reaktionszeiten zu ermöglichen.

- Ein Zwischenkuppeln bei einer Gangsynchronisierung vom Rückwärtsgang in den 2. Gang zur Unterstützung des Synchronisierungsvorganges ist möglich.

- Eine Aktivierung des Zwischenkuppelns zur Behebung von Einlegehängern (Zahn auf Zahn) ist möglich. Nach einer Verdrehung des Kupplungskörpers zur Führungsmuffe durch das Zwischenkuppeln kann der Gang nun eingelegt werden.

**Patentansprüche**

1. Verfahren zum Steuern eines Hochschaltvorganges (z.B. 4→6) ein einem Doppelkupplungsgetriebe (10), das eine mit einem Antriebsmotor (14) verbundene Doppelkupplungsgetriebe-Eingangswelle (12), zwei Reibkupplungen (16, 18) und zwei Teilgetriebe (20, 22) aufweist, mit den Schritten:

   - Erfassen eines Schaltwunsches von einem niedrigen Quellgang (4) in einen höheren Zielgang (6), wobei der Quellgang und der Zielgang einem (22) der zwei Teilgetriebe (20, 22) des Doppelkupplungsgetriebes (10) zugeordnet sind,
   - Öffnen der dem einen Teilgetriebe (22) zugeordneten Reibkupplung (18) und Schließen der dem anderen Teilgetriebe (20) zugeordneten Reibkupplung (16), um ohne Zugkrafteinbruch Antriebsleistung über einen Zwischengang (5) des anderen Teilgetriebes (20) zu übertragen, wobei hierdurch die Drehzahl der Doppelkupplungsgetriebe-Eingangswelle (12) abgesenkt wird,
   - Auslegen des Quellganges (4) und zwischenzeitliches Andrücken der dem einen Teilgetriebe (22) zugeordneten Reibkupplung (18) vor dem Einlegen des Zielganges (6), wobei die Drehzahl des einen Teilgetriebes (22) durch den Andrückvorgang verringert wird, indem von der mit verringerter Drehzahl drehenden Doppelkupplungsgetriebe-Eingangswelle (12) ein Schleppmoment (58) auf das eine Teilgetriebe (22) übertragen wird, so dass ein Synchronisieren des Zielganges (6) bei einer verringerten Differenzdrehzahl (w) begonnen werden kann, und

- Öffnen der dem anderen Teilgetriebe (20) zugeordneten Reibkupplung (16) und Schließen der dem einen Teilgetriebe (22) zugeordneten Reibkupplung (18), um ohne Zugkrafteinbruch Antriebsleistung auf den Zielgang (6) zu übergeben, **dadurch gekennzeichnet, dass** der Andrückvorgang in Abhängigkeit von bestimmten Betriebszuständen nur dann durchgeführt wird, wenn eine Verringerung der Differenzdrehzahl ($\omega$) an der Synchronisierung des Zielgangs (6) erforderlich oder vorteilhaft ist, indem der Andrückvorgang nur dann durchgeführt wird, wenn die Differenzdrehzahl ($\omega$) größer ist als ein bestimmter Schwellenwert, und/oder indem der Andrückvorgang nur dann durchgeführt wird, wenn die Reibgeschwindigkeit (v) eines Reibringes (78) der Zielschaltkupplung (32) größer ist als ein bestimmter Schwellenwert, und/oder indem der Andrückvorgang nur dann durchgeführt wird, wenn die Drehzahl ($n_{E1}$) des einen Teilgetriebes (22) größer ist als die Drehzahl ($n_{wM}$) der Doppelkupplungsgetriebe-Eingangswelle.

2. Verfahren nach Anspruch 1, wobei der Andrückvorgang so erfolgt, dass das auf das eine Teilgetriebe (22) übertragene Schleppmoment (58) allmählich aufgebaut wird.

3. Verfahren nach Anspruch 2, wobei das Schleppmoment (58) rampenförmig bzw. stufenförmig aufgebaut wird.

4. Verfahren nach einem der Ansprüche 1 - 3, wobei der Andrückvorgang beendet wird, wenn eine vorbestimmte Abbruchbedingung erfüllt ist.

5. Verfahren nach Anspruch 4, wobei das Beenden des Andrückvorganges so erfolgt, dass die Übertragung des Schleppmomentes (58) auf das eine Teilgetriebe (22) sprungartig beendet wird.

6. Verfahren nach Anspruch 4, wobei das Beenden des Andrückvorganges so erfolgt, dass die Übertragung des Schleppmomentes (58) auf das eine Teilgetriebe (22) rampenförmig bzw. stufenförmig beendet wird.

7. Verfahren nach einem der Ansprüche 4 - 6, wobei die Abbruchbedingung ein definierter Schwellenwert einer Änderungsrate einer Drehzahl ($n_{E2}$) des einen Teilgetriebes (22) ist.

8. Verfahren nach einem der Ansprüche 1 - 7, wobei das Synchronisieren des Zielganges (6) erst erfolgt, nachdem die dem einen Teilgetriebe (22) zugeordnete Reibkupplung (18) nach dem zwischenzeitlichen Andrücken wieder geöffnet ist.

9. Verfahren nach einem der Ansprüche 1 - 8, wobei ein Aktuator für die dem einen Teilgetriebe (22) zugeordnete Reibkupplung (18) beim Übergeben der Antriebsleistung auf das andere Teilgetriebe (20) diese Reibkupplung in einer Position kurz vor dem Anlagepunkt (Kiss- bzw. Touch-Punkt) hält, um das zwischenzeitliche Andrücken ggf. mit kürzerer Reaktionszeit durchführen zu können.

10. Verfahren nach einem der Ansprüche 1 - 9, wobei der Quellgang (4) unter Vorspannung ausgelegt wird, so dass die dem einen Teilgetriebe (22) zugeordnete Reibkupplung (18) nicht vollständig geöffnet werden muss, wenn die Antriebsleistung auf das andere Teilgetriebe (20) übertragen wird.

11. Verfahren nach einem der Ansprüche 1 - 10, wobei die dem einen Teilgetriebe (22) zugeordnete Reibkupplung (18) bei dem zwischenzeitlichen Andrücken nicht mehr als 20 Nm, vorzugsweise nicht mehr als 15 Nm, insbesondere nicht mehr als 10 Nm überträgt.

**Claims**

1. Method for controlling an upshift process (for example 4→6) in a dual-clutch gearbox (10) having a dual-clutch gearbox input shaft (12) connected to a drive engine (14), having two friction clutches (16, 18) and having two partial gearboxes (20, 22), the method comprising the steps:

- detecting a demand for a shift from a low source gear (4) into a higher target gear (6), with the source gear and the target gear being assigned to one (22) of the two partial gearboxes (20, 22) of the dual-clutch gearbox (10),
- opening the friction clutch (18) which is assigned to the one partial gearbox (22) and closing the friction clutch (16) assigned to the other partial gearbox (20) in order to transmit drive power via an intermediate gear (5) of the other partial gearbox (20) without an interruption in tractive force, with the rotational speed of the dual-clutch gearbox input shaft (12) being reduced in this way,
- disengaging the source gear (4) and temporarily exerting pressure in the friction clutch (18) assigned to the one partial gearbox (22) before the engagement of the target gear (6), with the rotational speed of the one partial gearbox (22) being reduced as a result of the pressure-exerting operation by virtue of a drag torque (58) being transmitted to the one partial gearbox (22) by the dual-clutch gearbox input shaft (12) which is rotating at a reduced rotational speed, such that a synchronization of the target gear (6) may be begun at a reduced differential rotational speed ($\omega$), and
- opening the friction clutch (16) assigned to the other partial gearbox (20) and closing the friction clutch (18) assigned to the one partial gearbox (22) in order to transfer drive power to the target gear (6) without an interruption in tractive force, **characterized in that** the pressure-exerting process is carried out in dependence on predetermined operation conditions only if a reduction of the differential rotational speed ($\omega$) at the synchronization of the target gear (6) is necessary or advantageous, with the pressure-exerting process being carried out when the differential rotational speed ($\omega$) is greater than a certain threshold value and/or with the pressure-exerting process being carried out only when the sliding speed (v) of a friction ring (78) of the target shift clutch (32) is greater than a certain threshold value and/or with the pressure-exerting process being carried out only when the rotational speed ($n_{E1}$) of the one partial gearbox (22) is greater than the rotational speed ($n_{wM}$) of the dual-clutch gearbox input shaft.

2. Method according to Claim 1, with the pressure-exerting process taking place such that the drag torque (58) which is transmitted to the one partial gearbox (22) being built up gradually.

3. Method according to Claim 2, with the drag torque (58) being built up in a ramped or stepped fashion.

4. Method according to one of Claims 1-3, with the pressure-exerting process being ended when a predetermined stop condition is met.

5. Method according to Claim 4, with the ending of the pressure-exerting process taking place such that the transmission of the drag torque (58) to the one partial gearbox (22) is ended abruptly.

6. Method according to Claim 4, with the ending of the pressur-exerting process taking place such that the transmission of the drag torque (58) to the one partial gearbox (22) is ended in a ramped or stepped fashion.

7. Method according to one of Claims 4-6, with the stop condition being a defined threshold value of a rate of change of a rotational speed ($n_{E2}$) of the one partial gearbox (22).

8. Method according to one of Claims 1-7, with the synchronization of the target gear (6) taking place only once the friction clutch (18) assigned to the one partial gearbox (22) is opened again after the temporary exertion of pressure.

9. Method according to one of Claims 1-8, with an actuator for the friction clutch (18) assigned to the one partial gearbox (22), during the transfer of the drive power to the other partial gearbox (20), holding said friction clutch in a position a short distance before the contact point (kiss or touch point) in order to be able to carry out the temporary exertion of pressure with a relatively short reaction time if appropriate.

10. Method according to one of Claims 1-9, with the source gear (4) being disengaged under preload such that the friction clutch (18) assigned to the one partial gearbox (22) need not be opened fully when the drive power is transferred to the other partial gearbox (20).

11. Method according to one of Claims 1-10, with the friction clutch (18) assigned to the one partial gearbox (22) transmitting no more than 20 Nm, preferably no more than 15 Nm and in particular no more than 10 Nm during the temporary exertion of pressure.

**Revendications**

1. Procédé pour commander un processus de passage en vitesse supérieure (par exemple 4 → 6) dans une boîte de vitesses à double embrayage (10), qui présente un arbre d'entrée de boîte de vitesses à double embrayage (12) relié à un moteur d'entraînement (14), deux embrayages à friction (16, 18) et deux engrenages partiels (20, 22), comprenant les étapes suivantes :

saisie d'un souhait de changement de vitesse d'une vitesse source (4) basse dans une vitesse cible (6) supérieure, la vitesse source et la vitesse cible étant attribuées à l'un (22) des deux engrenages partiels (20, 22) de la boîte de vitesses à double embrayage (10),

ouverture de l'embrayage à friction (18) attribué à un engrenage partiel (22) et fermeture de l'embrayage à friction (16) attribué à l'autre engrenage partiel (20), afin de transmettre, sans interruption de force de traction, de la puissance d'entraînement par le biais d'une vitesse intermédiaire (5) de l'autre engrenage partiel (20), le régime de l'arbre d'entrée de boîte de vitesses à double embrayage (12) étant ainsi abaissé,

conception de la vitesse source (4) et pression intermédiaire sur l'embrayage à friction (18) attribué à l'un des engrenages partiels (22) avant l'enclenchement de la vitesse cible (6), le régime de l'un des engrenages partiels (22) étant réduit par l'opération de pression, du fait qu'un couple de traînée (58) est transmis de l'arbre d'entrée de boîte de vitesses à double embrayage (12) tournant à régime réduit à l'un des engrenages partiels (22), de sorte qu'une synchronisation de la vitesse cible (6) peut être commencée avec un régime différentiel (w) réduit, et

ouverture de l'embrayage à friction (16) attribué à l'autre engrenage partiel (20) et fermeture de l'embrayage à friction (18) attribué à l'un des engrenages partiels (22), afin de céder de la puissance d'entraînement à la vitesse cible (6) sans interruption de force de traction, **caractérisé en ce que** l'opération de pression n'est effectuée en fonction de certains états de service que dans le cas où une réduction du régime différentiel (m) est nécessaire ou avantageuse sur la synchronisation de la vitesse cible (6), du fait que l'opération de pression n'est effectuée que dans le cas où le régime différentiel (ω) est supérieur à une valeur seuil définie, et/ou du fait que l'opération de pression n'est effectuée que dans le cas où la vitesse de frottement (v) d'une bague de frottement (78) de l'embrayage de changement de vitesse cible (32) est supérieure à une valeur seuil définie, et/ou du fait que l'opération de pression n'est effectuée que dans le cas où le régime ($n_{E1}$) de l'un des engrenages partiels (22) est supérieur au régime (nwM) de l'arbre d'entrée de boîte de vitesses à double embrayage.

2. Procédé selon la revendication 1, l'opération de pression étant effectuée de telle sorte que le couple de traînée (58) transmis à l'un des engrenages partiels (22) est établi petit à petit.

3. Procédé selon la revendication 2, le couple de traînée (58) étant établi en forme de rampe ou en forme de marche.

4. Procédé selon l'une quelconque des revendications 1 à 3, l'opération de pression étant achevée lorsqu'une condition d'interruption prédéfinie est remplie.

5. Procédé selon la revendication 4, l'achèvement de l'opération de pression intervenant de telle sorte que la transmission du couple de traînée (58) à l'un des engrenages partiels (22) est terminée brusquement.

6. Procédé selon la revendication 4, l'achèvement de l'opération de pression intervenant de telle sorte que la transmission du couple de traînée (58) à l'un des engrenages partiels (22) est achevée en forme de rampe ou de marche.

7. Procédé selon l'une quelconque des revendications 4 à 6, la condition d'interruption étant une valeur seuil définie d'un taux de variation d'un régime ($n_{E2}$) de l'un des engrenages partiels (22).

8. Procédé selon l'une quelconque des revendications 1 à 7, la synchronisation de la vitesse cible (6) n'étant effectuée qu'une fois que l'embrayage à friction (18) attribué à l'un des engrenages partiels (22) est à nouveau ouvert après la pression intermédiaire.

9. Procédé selon l'une quelconque des revendications 1 à 8, un actionneur pour l'embrayage à friction (18) attribué à l'un des engrenages partiels (22) maintenant, lors de la transmission de la puissance d'entraînement à l'autre engrenage partiel (20), cet embrayage à friction dans une position juste avant le point d'application (point Kiss ou point Touch), afin de pouvoir effectuer la pression intermédiaire éventuellement avec un temps de réaction plus court.

10. Procédé selon l'une quelconque des revendications 1 à 9, la vitesse source (4) étant conçue sous pré-tension, de telle sorte que l'embrayage à friction (18) attribué à l'un des engrenages partiels (22) ne doit pas être complètement ouvert lorsque la puissance d'entraînement est transmise à l'autre engrenage partiel (20).

11. Procédé selon l'une quelconque des revendications 1 à 10, l'embrayage à friction (18) attribué à l'un des engrenages partiels (22) ne transmettant, lors de la pression intermédiaire, pas plus de 20 Nm, de préférence pas plus de 15 Nm, en particulier pas plus de 10 Nm.

Fig.1

Fig.2

Fig.3

Fig.4

Fig.5

Fig.6

Fig.7

**Fig.8**

Fig.9

Fig.10

Fig.11

Fig.12

K1

3

Fig.13

K2   N   4   34   18

K1

3

Fig.14

K2   6   32   N   34

K1

3

16

Fig.15

K2   6   18

K1

3

16

Fig.16

K2   6   18

EP 2 183 507 B1

**60** **62** **72**

**Fortlaufende Berechnungen**

Schlupfberechnungen

Berechnung Schlupf zwischen aktiver Getriebe-eingangsdrehzahl und Motordrehzahl

Berechnung Schlupf zwischen aktiver ... Getriebeeingangsdrehzahl und ... Getriebezieldrehzahl

Berechnung der Umlaufgeschwindigkeit der .... Synchronringe — **64**

Berechnung der Notwendigkeit des Zwischen ... kuppelns. Berechnung der Synchronverzögerung — **66**

Berechnung ob Kupplungsschleppmoment ... angelegt werden darf. — **68**

2 — (Kuppeln erlaubt)

Modifikation des Kupplungsmodus — **70**

**Kupplung**

(Kuppeln erlaubt UND ... Kuppeln notwendig UND Gangsynchronisierung nicht aktiv)

**76**

Kupplung öffnen

Kupplungsmoment .. aufbauen

**74**

(Kuppeln nicht erlaubt ODER ... Kuppeln nicht notwendig ODER ... Gangsynchronisierung aktiv)

**36**

**46** **78**

$v(6)$

**42**

$\omega(6)$

$\omega_{LR}$ $\omega_W$

**Fig.18**

**Schaltlogik**

Gang ausgelegt → (keine Synchronverzögerung) → Gang synchronisieren

**Fig.17**

80 — **Manual controll shifting (MT)**

| rotation in lower gear | gear shift | rotational speed difference | rotation skip | sliding speed |
|---|---|---|---|---|
| 0,50 x n_max (3250 rpm) | 2-3 | 784 | 1126 | 2,94 |
|  | 2-1 | 315 | 1235 | 1,18 |
|  | 3-4 | 920 | 939 | 3,44 |
|  | 3-2 | 464 | 1126 | 1,77 |
|  | 4-5 | 953 | 808 | 3,57 |
|  | 4-3 | 654 | 939 | 2,45 |
|  | 5-6 | 1042 | 694 | 3,90 |
|  | 5-4 | 791 | 808 | 2,96 |
| 0,75 x n_max (4875 rpm) | 2-3 | 1176 | 1689 | 4,40 |
|  | 2-1 | 473 | 1852 | 1,77 |
|  | 3-4 | 1380 | 1409 | 5,17 |
|  | 3-2 | 696 | 1689 | 2,66 |
|  | 4-5 | 1429 | 1212 | 5,35 |
|  | 4-3 | 981 | 1409 | 3,67 |
|  | 5-6 | 1563 | 1042 | 5,85 |
|  | 5-4 | 1187 | 1212 | 4,44 |
| n_max (6500 rpm) | 2-3 | 1569 | 2252 | 5,87 |
|  | 2-1 | 631 | 2470 | 2,36 |
|  | 3-4 | 1841 | 1879 | 6,89 |
|  | 3-2 | 927 | 2252 | 3,54 |
|  | 4-5 | 1906 | 1616 | 7,14 |
|  | 4-3 | 1309 | 1879 | 4,90 |
|  | 5-6 | 2083 | 1389 | 7,80 |
|  | 5-4 | 1583 | 1616 | 5,93 |

82 — **Double shifting-step without clutch strategy**

| gear shift | rotational speed difference | rotation skip | sliding speed |
|---|---|---|---|
| 1-3 | 1346 | 1933 | 5,04 |
| 3-1 | 494 |  | 1,85 |
| 2-4 | 1705 | 1740 | 6,38 |
| 4-2 | 717 |  | 2,74 |
| 3-5 | 1785 | 1515 | 6,68 |
| 5-3 | 1054 |  | 3,95 |
| 4-6 | 1993 | 1330 | 7,46 |
| 6-4 | 1302 |  | 4,87 |
| 1-3 | 2019 | 2900 | 7,56 |
| 3-1 | 740 |  | 2,77 |
| 2-4 | 2557 | 2610 | 9,57 |
| 4-2 | 1075 |  | 4,11 |
| 3-5 | 2678 | 2271 | 10,03 |
| 5-3 | 1581 |  | 5,92 |
| 4-6 | 2992 | 1995 | 11,20 |
| 6-4 | 1954 |  | 7,32 |
| 1-3 | 2693 | 3866 | 10,08 |
| 3-1 | 987 | 3866 | 3,70 |
| 2-4 | 3409 | 3480 | 12,76 |
| 4-2 | 1483 | 3480 | 5,48 |
| 3-5 | 3571 | 3028 | 13,37 |
| 5-3 | 2109 | 3028 | 7,90 |
| 4-6 | 3989 | 2659 | 14,93 |
| 6-4 | 2605 | 2659 | 9,79 |

84 — **Double shifting-step with clutch strategy**

| driving gear | gear shift | rotational speed difference | rotation skip | sliding speed |
|---|---|---|---|---|
| 2 | 1-3 | 486 | 698 | 1,82 |
|  | 3-1 | 315 | 1235 | 1,18 |
| 3 | 2-4 | 601 | 614 | 2,25 |
|  | 4-2 | 464 | 1126 | 1,77 |
| 4 | 3-5 | 677 | 574 | 2,53 |
|  | 5-3 | 654 | 939 | 2,45 |
| 5 | 4-6 | 783 | 522 | 2,93 |
|  | 6-4 | 791 | 808 | 2,96 |
| 2 | 1-3 | 729 | 1047 | 2,73 |
|  | 3-1 | 473 | 1852 | 1,77 |
| 3 | 2-4 | 902 | 921 | 3,38 |
|  | 4-2 | 696 | 1689 | 2,66 |
| 4 | 3-5 | 1016 | 862 | 3,80 |
|  | 5-3 | 981 | 1409 | 3,67 |
| 5 | 4-6 | 1174 | 783 | 4,40 |
|  | 6-4 | 1187 | 1212 | 4,44 |
| 2 | 1-3 | 973 | 1397 | 3,64 |
|  | 3-1 | 631 | 2470 | 2,36 |
| 3 | 2-4 | 1203 | 1228 | 4,50 |
|  | 4-2 | 927 | 2252 | 3,54 |
| 4 | 3-5 | 1355 | 1149 | 5,07 |
|  | 5-3 | 1309 | 1879 | 4,90 |
| 5 | 4-6 | 1565 | 1044 | 5,86 |
|  | 6-4 | 1583 | 1616 | 5,93 |

Fig.19

EP 2 183 507 B1

Fig.20

EP 2 183 507 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10133695 A1
- DE 10349220 A1
- DE 102006010934 A1
- DE 102006002490